# EUROPÄISCHE PATENTSCHRIFT

(11) **EP 4 438 412 B1**
(45) Veröffentlichungstag und Bekanntmachung des Hinweises auf die Patenterteilung: **07.10.2026**
(21) Anmeldenummer: 24163450.0
(22) Anmeldetag: 14.03.2024
(51) Int. Cl.: B60R 1/04

(54) **ANORDNUNG UND FAHRZEUG**
ARRANGEMENT AND VEHICLE
ENSEMBLE ET VÉHICULE

(30) Priorität: 27.03.2023 DE 102023202734
(43) Veröffentlichungstag der Anmeldung: 02.10.2024
(73) Patentinhaber: VOLKSWAGEN AG, 38440 Wolfsburg (DE)
(72) Erfinder: Kahrens, Dietmar, 38467 Bergfeld (DE); Rudat, Robin, 38159 Vechelde (DE)

(56) Entgegenhaltungen:
- EP-B1- 0 590 111
- WO-A1-2014/052658
- DE-T5- 112019 000 611
- DE-U1- 212018 000 374
- US-B2- 8 925 891

## Beschreibung

Die Erfindung betrifft eine Anordnung zur Befestigung eines Innenrückspiegels an einem Fahrzeug, insbesondere Kraftfahrzeug, wobei der Innenrückspiegel einen Spiegelkopf und einen Spiegelfuß aufweist, die miteinander verbunden sind, wobei der Spiegelfuß an einer fahrzeugfesten Basisplatte lösbar befestigt ist, wobei zur lösbaren Befestigung wenigstens ein elastisch verformbares erstes Klammerelement an dem Spiegelfuß einerseits und an der Basisplatte andererseits gehalten ist, und wobei das erste Klammerelement durch seine elastische Verformung von der Basisplatte und/oder von dem Spiegelfuß lösbar ist.

Weiterhin betrifft die Erfindung ein Fahrzeug mit der oben beschriebenen Anordnung. Anordnungen der eingangs genannten Art sind beispielsweise aus der Patentschrift EP 3 684 648 B1 bekannt. Dabei ist eine Basisplatte direkt an einer Windschutzscheibe eines Kraftfahrzeugs befestigt und dient zum Tragen eines Innenrückspiegels. Dieser weist einen der Basisplatte zugeordneten Spiegelfuß sowie einen ein Spiegelelement tragenden Spiegelkopf auf. Der Spiegelkopf ist dabei an dem Spiegelfuß verschwenkbar gelagert. Spiegelfuß und Basisplatte sind durch ein Schwenkgelenk und ein Klammerelement miteinander verbunden. Dabei ist das Klammerelement derart ausgebildet, dass es sich bei Auftreten einer ausreichend hohen Kraft, die auf den Spiegelkopf wirkt, von dem Spiegelfuß oder von der Basisplatte löst und dadurch ein Verschwenken des Innenrückspiegels relativ zu der Basisplatte ermöglicht. Dadurch wird das Risiko für Insassen des Fahrzeugs, sich an dem Innenrückspiegel zu verletzen, reduziert, weil der Innenrückspiegel nachgeben kann. Gleichzeitig wird durch das Schwenklager verhindert, dass sich der Innenrückspiegel vollständig von der Basisplatte löst und beispielsweise als gelöstes Einzelteil durch den Fahrzeuginnenraum geschleudert werden kann.

Weitere Anordnungen zur Befestigung eines Innenrückspiegels sind aus der Patentschrift US 8,925,891 B2, die den Oberbegriff des Anspruchs 1 zeigt, den Offenlegungsschriften DE 11 2019 000611 T5 und WO 2014/052658 A1 sowie der Gebrauchsmusterschrift DE 21 2018 000374 U1 bekannt.

Der vorliegenden Erfindung liegt die Aufgabe zugrunde, eine verbesserte Anordnung zu schaffen, die zum einen die Montage erleichtert und zum anderen ein Verlagern des Innenrückspiegels relativ zu der Basisplatte in weitere Richtungen ermöglicht, ohne dass dabei ein vollständiges Lösen des Innenrückspiegels von der Basisplatte erfolgen kann. Ziel der vorliegenden Erfindung ist es also, die Beweglichkeit des Innenrückspiegels relativ zu der Basisplatte um mindestens einen weiteren Freiheitsgrad gegenüber der vorbekannten Lösung zu erhöhen.

Die der Erfindung zugrunde liegende Aufgabe wird durch eine Anordnung mit den Merkmalen des Anspruchs 1 in vorteilhafter Weise gelöst. Erfindungsgemäß ist hierzu vorgesehen, dass an dem Spiegelfuß einerseits und an der Basisplatte andererseits ein zweites Klammerelement mit Spiel formschlüssig gehalten ist, wobei das zweite Klammerelement derart ausgebildet ist, dass das erste Klammerelement unter elastischer Verformung des ersten Klammerelements vollständig von dem Spiegelfuß oder von der Basisplatte ohne Lösen des zweiten Klammerelements lösbar ist. Dies wird beispielsweise dadurch erreicht, dass das Spiel derart groß ist, dass das zweite Klammerelement erst dann greift beziehungsweise eine Arretierung des Spiegelfußes an der Basisplatte bewirkt, wenn das erste Klammerelement vollständig gelöst wurde. Alternativ oder zusätzlich ist das zweite Klammerelement zumindest bereichsweise elastisch verformbar ausgebildet, sodass auch vor Überwinden des Spiels durch elastische Verformung des zweiten Klammerelements ein vollständiges Lösen des ersten Klammerelements ermöglicht ist. Mit einfachen und kostengünstigen Mitteln ist die Anordnung somit derart verbessert, dass sie das Verletzungsrisiko für Fahrzeuginsassen weiter reduziert und außerdem auch eine einfache Montage und Demontage der ermöglicht.

Gemäß der Erfindung weist das erste Klammerelement eine sich zwischen Spiegelfuß und Basisplatte erstreckende Klammerplatte auf, an der ein oder mehrere Federelemente angeordnet sind, wobei das jeweilige Federelement jeweils einen Rastvorsprung des Spiegelfußes oder der Basisplatte formschlüssig spielfrei hintergreift. Durch die Basisplatte wird das jeweilige Federelement in einer gewünschten Position gehalten und für den Fall, dass das erste Klammerelement mehrere Federelemente aufweist, werden die Federelemente durch die erste Klammerplatte zusammen gehalten. Vorzugsweise weisen die mehreren Federelemente in die gleiche Richtung beziehungsweise stehen in die gleiche Richtung von der ersten Klammerplatte vor, sodass die Federelemente entweder nur dem Spiegelfuß oder nur der Basisplatte zugeordnet sind. Gemäß einer alternativen Ausführungsform ist zumindest eines der Federelemente dem Spiegelfuß und zumindest ein anderes der Federelemente der Basisplatte zugeordnet. In jedem Fall hintergreift das jeweilige Federelement den Spiegelfuß oder die Basisplatte formschlüssig spielfrei, wobei bevorzugt das jeweilige Federelement im montierten Zustand vorgespannt ist, um die spielfreie Lagerung zu gewährleisten. Dadurch wird sichergestellt, dass im Normalfall der Innenrückspiegel fest an der Basisplatte gehalten ist und auch im Fahrbetrieb Relativbewegungen zwischen Basisplatte und Spiegelfuß, die zu Klappergeräuschen führen könnten, verhindert werden.

Gemäß einer bevorzugten Weiterbildung der Erfindung ist die erste Klammerplatte an dem Spiegelfuß oder an der Basisplatte befestigt. Somit ist das erste Klammerelement insbesondere mittels der Klammerplatte entweder an der Basisplatte oder an dem Spiegelfuß und mittels des einen oder der mehreren Federelemente an dem Spiegelfuß oder an der Basisplatte, also an dem jeweils anderen Teil, gehalten. Vorzugsweise ist die Basisplatte dauerhaft oder nichtwerkzeugfrei lösbar an dem Spiegelfuß oder an der Basisplatte gehalten. Hierzu ist insbesondere vorgesehen, dass die Klammerplatte an dem Spiegelfuß oder an der Basisplatte verschraubt, verklemmt, verklebt und/oder verschweißt gehalten ist.

Vorzugsweise sind die mehreren Federelemente symmetrisch oder gleichmäßig über den Umfang der Klammerplatte verteilt angeordnet, wodurch sich eine vorteilhafte Lagerung des Innenrückspiegels an der Basisplatte ergibt, die eine Verlagerbarkeit des Innenrückspiegels relativ zu der Basisplatte in mehrere Richtungen mit gleichem oder nahezu gleichem Kraftaufwand ermöglicht.

Erfindungsgemäß weist das zweite Klammerelement ein oder mehrere Hakenelemente auf, die einen Haltevorsprung des Spiegelfußes oder der Basisplatte mit dem oben genannten Spiel formschlüssig hintergreifen. Sobald das Spiel überwunden ist, gelangen die Hakenelemente oder das eine Hakenelement in einen formschlüssig Anlagekontakt mit Spiegelfuß oder Basisplatte, wodurch ein weiteres Entfernen des Spiegelfußes von der Basisplatte verhindert ist.

Erfindungsgemäß sind die Hakenelemente im Vergleich zu den Federelementen steif ausgebildet, sodass sie nicht durch eine elastische Verformung ihrerseits von Spiegelfuß oder Basisplatte werkzeugfrei lösbar sind.

Weiterhin ist bevorzugt vorgesehen, dass das zweite Klammerelement eine zweite Klammerplatte aufweist, die sich zwischen Basisplatte und Spiegelfuß und insbesondere parallel zu der ersten Klammerplatte erstreckt, und an ihrem Außenumfang das oder die Hakenelemente aufweist. Das zweite Klammerelement ist somit ein von dem ersten Klammerelement separates Bauteil, das zwischen Spiegelfuß und Basisplatte angeordnet ist. Die beiden Klammerplatten können beispielsweise im montierten Zustand im Normalbetrieb aufeinander aufliegen oder beabstandet voneinander sein. Durch die Ausbildung der Klammerelemente als separate Bauteile können diese auf ihre jeweilige Aufgabe optimiert beispielsweise in Bezug auf ihre Elastizität ausgebildet sein. So werden für die beiden Klammerelemente optional unterschiedliche Materialien verwendet.

Besonders bevorzugt sind das oder die Halteelemente einstückig mit der zweiten Basisplatte ausgebildet. Vorzugsweise sind auch die Federelemente einstückig mit der ersten Basisplatte ausgebildet. Dadurch ergeben sich zwei einzeln handhabbare Klammerelement, die bei der Montage einfach anordenbar und montierbar sind.

Gemäß einer alternativen Ausführungsform der Erfindung sind das oder die Hakenelemente des zweiten Klammerelements bevorzugt an der ersten Klammerplatte angeordnet und insbesondere einstückig mit dieser ausgebildet. In diesem Fall sind sowohl das oder die Federelemente als auch das oder die Hakenelemente jeweils an der ersten Basisplatte angeordnet. Hierdurch ergibt sich ein besonders kompaktes Bauteil, das zwischen Spiegelfuß und Basisplatte wirkt, wodurch der Montageaufwand weiter reduziert wird. Auch die Herstellungskosten werden dadurch insgesamt weiter gesenkt werden.

Vorzugsweise ist das zweite Klammerelement, wie oben bereits erwähnt, elastisch verformbar ausgebildet, um das vollständige Lösen des ersten Klammerelements von Spiegelfuß oder Basisplatte ohne Lösen des zweiten Klammerelements zu ermöglichen. Dabei ist das zweite Klammerelement vorzugsweise nur bereichsweise elastisch verformbar ausgebildet, sodass insbesondere die Hakenelemente steif ausgebildet sind. Dies ist insbesondere dann von Vorteil, wenn das zweite Klammerelement eine eigene zweite Klammerplatte aufweist.

Dabei ist dann außerdem bevorzugt vorgesehen, dass die zweite Klammerplatte eine im Vergleich zu den Hakenelementen höhere Elastizität aufweist. Dadurch wird erreicht, dass bei Belastung des Innenrückspiegels die zweite Klammerplatte elastisch verformbar ist, um ein Verlagern des Innenrückspiegels relativ zu der Basisplatte in unterschiedliche Richtungen zu ermöglichen, wobei durch die im Vergleich dazu steife Ausbildung des oder der Hakenelemente ein Lösen des Innenrückspiegels von der Basisplatte verhindert ist.

Sind Hakenelemente und Federelemente an der ersten Basisplatte angeordnet und insbesondere einstückig mit dieser ausgebildet, weisen die Hakenelemente bevorzugt durch ihre Formgebung eine höhere Steifheit als die Federelemente auf. Dazu weisen die Hakenelemente beispielsweise einen L-förmigen Verlauf mit einem rechten Winkel auf, und die Federelemente einen zumindest abschnittsweise gekrümmten, insbesondere V-förmigen Verlauf mit zueinander schräg, aber nicht senkrecht verlaufenden Abschnitten auf, die ein selbständiges Lösen durch elastische Verformung der Federelemente begünstigen.

Das erfindungsgemäße Fahrzeug mit den Merkmalen des Anspruchs 8 zeichnet sich durch die erfindungsgemäße Anordnung aus. Es ergeben sich hierdurch die bereits genannten Vorteile.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: eine perspektivische Explosionsdarstellung einer vorteilhaften Anordnung,
- Figur 2: ein Klammerelement der Anordnung in einer perspektivischen Einzeldarstellung,
- Figuren 3A und B: die Anordnung in unterschiedlichen Gebrauchszuständen, und
- Figur 4: ein Klammerelement der Anordnung gemäß einem weiteren Ausführungsbeispiel.

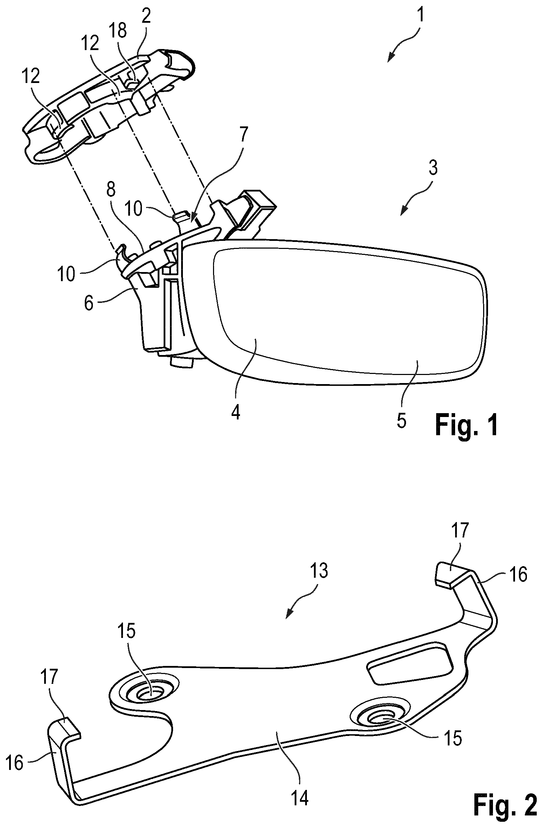

**Figur 1** zeigt in einer perspektivischen Explosionsdarstellung eine vorteilhafte Anordnung 1 für ein hier nicht näher dargestelltes Kraftfahrzeug. Die Anordnung 1 weist eine Basisplatte 2 auf, die an einer Windschutzscheibe des Kraftfahrzeugs befestigbar, insbesondere festklebbar oder festgeklebt ist. Weiterhin weist die Anordnung 1 einen Innenrückspiegel 3 auf, der an der Basisplatte 2 befestigbar ist. Dabei weist der Innenrückspiegel 3 einen Spiegelkopf 4 auf, der ein Spiegelelement 5 trägt, sowie einen Spiegelfuß 6, der mit der Basisplatte 2 verbindbar ist. Der Spiegelkopf 4 ist an dem Spiegelfuß 6 insbesondere gelenkig beziehungsweise beweglich gelagert, um die Ausrichtung des Spiegelelements 5 an die Bedürfnisse eines Benutzers anpassen zu können.

Die Anordnung 1 weist weiterhin ein erstes Klammerelement 7 auf. Dieses Klammerelement ist an dem Spiegelfuß 6, an seiner der Basisplatte 2 zugewandten Seite, befestigt. Insbesondere ist das Klammerelement 7 an dem Spiegelfuß 6 verschraubt. Dazu weist das erste Klammerelement 7 vorzugsweise eine Klammerplatte 8 auf, die auf dem Boden beziehungsweise der freien Stirnseite des Spiegelfußes 6 aufliegt und daran verschraubt ist.

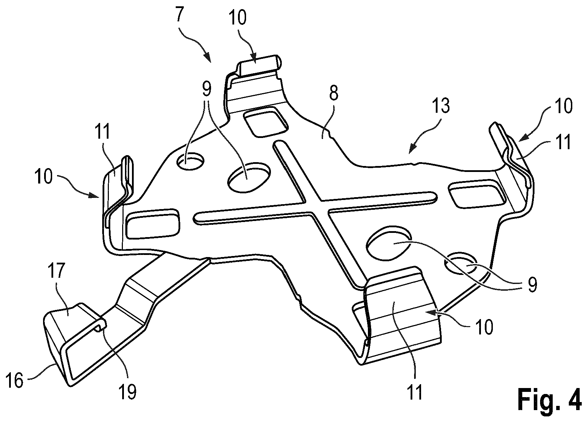

Dazu weist die Klammerplatte 8, wie beispielhaft in **Figur 4** gezeigt, mehrere Durchgangsöffnungen 9 auf, durch welche eine oder mehrere Befestigungsschrauben führbar und in dem Spiegelfuß 6 verschraubbar sind. Der Spiegelfuß 6 weist dazu beispielsweise in die Stirnseite eingelassene Gewinde oder Gewindebolzen auf, in welche die Befestigungsschrauben einschraubbar sind.

Das Klammerelement 7 weist weiterhin mehrere an seinem Außenumfang angeordnete Federelemente 10 auf, die von der Basisplatte 8 in die gleiche Richtung, nämlich gemäß dem vorliegenden Ausführungsbeispiel in Richtung der Basisplatte 2, vorstehen. Die Federelemente 10 sind dabei einstückig mit der Klammerplatte 8 ausgebildet. Jedes Federelement 10 weist dabei einen insbesondere senkrecht von der Klammerplatte 8 vorstehenden Abschnitt und einen sich daran anschließenden schräg verlaufenden Halteabschnitt 11 auf, der somit sowohl schräg in Bezug auf den senkrecht verlaufenden Abschnitt als auch schräg in Bezug auf die Basisplatte 8 ausgerichtet ist, beispielsweise in einem Winkel von 45 Grad. Die Halteabschnitte 11 weisen aufeinander zu, sind also nach innen erstreckend ausgerichtet.

Die Basisplatte 2 weist für jedes der Federelemente 10 jeweils einen Rastvorsprung 12 auf, wie in **Figur 1** gezeigt. Bei der Montage wird der Spiegelfuß 6 mit dem daran befestigten Klammerelement 7 auf die Basisplatte 2 derart aufgeschoben, dass die Federelemente 11 von dem jeweiligen Rastvorsprung 12 zunächst nach außen unter elastischer Verformung zurückgedrängt werden, um dann aufgrund ihrer eigenen Elastizität nach Überwinden des jeweiligen Rastvorsprungs 12 zurück zu schnappen beziehungsweise den jeweiligen Rastvorsprung 12 formschlüssig zu hintergreifen. Dabei ist das Klammerelement 7 derart ausgebildet, dass im montierten Zustand die Federelemente 11 elastisch vorgespannt an der Basisplatte 2, insbesondere an dem jeweiligen Rastvorsprung 12 anliegen, sodass eine feste Verbindung von Spiegelfuß 6 zu Basisplatte 2 gewährleistet ist, die spielfrei ist. Dadurch werden beispielsweise Klappergeräusche im Normalbetrieb vermieden.

Aufgrund der schräg verlaufenden Halteabschnitte 11 können die Federelemente 11 jedoch von dem jeweiligen Rastvorsprung 12 auch werkzeugfrei gelöst werden, sofern eine ausreichend hohe Kraft auf den Spiegelfuß 6 bewirkt. Dann werden die Halteabschnitte durch ihren schrägen Verlauf von den Rastvorsprüngen 12 nach außen gedrängt und dadurch von der Basisplatte 2 gelöst.

Um zu vermeiden, dass sich der Spiegelfuß 6 ungewollt vollständig von der Basisplatte 2 lösen kann, weist die Anordnung 1 bevorzugt ein zweites Klammerelement 13 auf. **Figur 2** zeigt dazu das zweite Klammerelement 13 in einer perspektivischen Darstellung. Das zweite Klammerelement 13 weist eine zweite Klammerplatte 14 auf, die ebenfalls eine oder mehrere Durchgangsöffnungen 15 zur Durchführung von Befestigungsschrauben aufweist. Insbesondere ist die Klammerplatte 14 dazu ausgebildet, dass sie auf der Klammerplatte 8 auflegbar ist, wobei dann zumindest zwei der Durchgangsöffnungen 15, 9 miteinander fluchten, sodass mit einer Befestigungsschraube beide Klammerplatten 8 und 14 durchdrungen und an dem Spiegelfuß 6 befestigt werden können. Vorzugsweise sind wenigstens zwei Befestigungsschrauben vorgesehen.

Die Klammerplatte 14 erstreckt sich somit im montierten Zustand ebenfalls zwischen Spiegelfuß 6 und Basisplatte 2 und liegt dabei vorzugsweise auf der Klammerplatte 8 auf. Die Klammerplatte 14 weist einander diametral gegenüber angeordnet zwei Hakenelemente 16 an ihrem Außenumfang auf. Die Hakenelemente 16 weisen jeweils einen zumindest im Wesentlichen senkrecht von der Klammerplatte 14 vorstehenden Abschnitt und einen sich daran in einem rechten Winkel anschließenden Rückhalteabschnitt 17 auf. Dadurch weisen die Hakenelemente 16 einen L-förmigen Verlauf auf.

Die Basisplatte 2 weist für jedes der Hakenelemente 16 jeweils einen Haltevorsprung 18 auf, der von dem jeweiligen Rückhalteabschnitt 17 eines Hakenelements 16 im montierten Zustand hintergriffen wird. Dabei sind die Hakenelemente 16 derart ausgebildet, dass aufgrund ihres L-förmigen Verlaufs ein selbstständiges Lösen der formschlüssigen Verbindung nicht möglich ist. Dabei sind die Hakenelemente 16 derart ausgebildet, dass zwischen dem Klammerelement 13 und der Basisplatte 2 ein Spiel besteht, sodass die Hakenelemente 16 im Normalzustand nicht mit der Basisplatte 2 zusammenwirken.

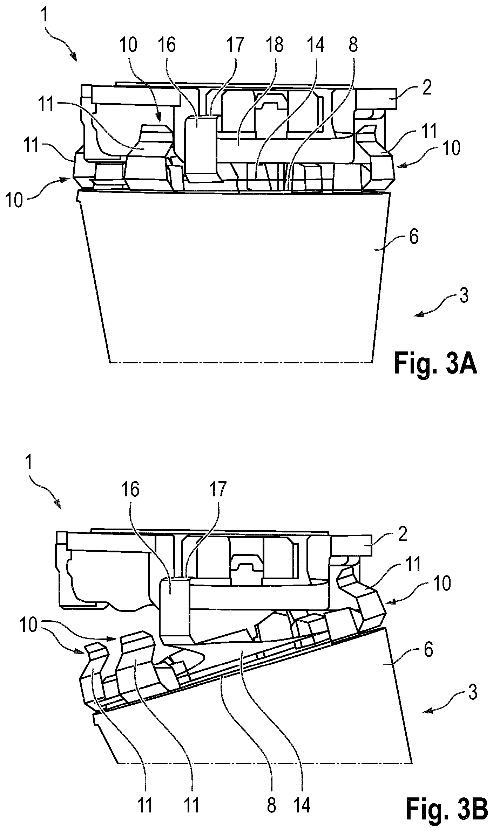

**Figur 3A** zeigt hierzu in einer vereinfachten Draufsicht die Anordnung 1 im montierten Normalzustand. Die Federelemente 10 hintergreifen die zugehörigen Rastvorsprünge 12 der Basisplatte 2 und die Halteelemente 16 hintergreifen den jeweiligen Haltevorsprung 18 der Basisplatte 2. Die Klammerplatten 8 und 14 liegen dabei gemäß dem vorliegenden Ausführungsbeispiel beabstandet zueinander. Gemäß einem alternativen, hier nicht gezeigten Ausführungsbeispiel, liegen die Klammerplatten 8 und 14 aufeinander beziehungsweise aneinander an. Der Rückhalteabschnitt 17 der Halteelemente 16 liegt dabei beabstandet zu dem Haltevorsprung 18 der Basisplatte 2.

Wirkt nun eine ausreichend große Kraft auf den Innenspiegel 3, so können die Federelemente 10 von ihrem jeweiligen Rastvorsprung 12 gelöst werden, wie in **Figur 3B** im gelösten Zustand gezeigt. Aufgrund des L-förmigen Verlaufs und der im Vergleich steiferen Ausbildung der Hakenelemente 16 lösen sich diese jedoch nicht von dem Hintergriff mit dem jeweiligen Haltevorsprung 18.

Die Klammerplatte 14 des Klammerelements 13 ist insbesondere elastisch verformbar ausgebildet, wohingegen die Hakenelemente 16 im Unterschied zu den Federelementen 10 verhältnismäßig steif ausgebildet sind. Dadurch kann der Innenspiegel 3 relativ zu der Basisplatte 2 verschwenkt werden, wie in **Figur 3B** gezeigt, wobei das Klammerelement 13 dafür sorgt, dass sich der Innenspiegel 3 nicht vollständig von der Basisplatte 2 lösen kann, da das Klammerelement 13 weiterhin in Eingriff bleibt.

**Figur 4** zeigt eine vorteilhafte Weiterbildung der Anordnung 1, die sich von dem vorhergehenden Ausführungsbeispiel dadurch unterscheidet, dass das Klammerelement 13 in das erste Klammerelement 7 integriert ist. Dazu weist das Klammerelement 7 zusätzlich zu den Federelementen 10 eines der Hakenelemente 16 auf. Hierbei ist die Steifheit des Hakenelemente 16 im Vergleich zu den Federelementen 10 insbesondere dadurch erhöht, dass das Hakenelement 16 den bereits beschriebenen L-förmigen Verlauf aufweist, während die Federelemente 10 aufgrund der schräg verlaufenden Halteabschnitte 11 eher einen V- Verlauf aufweisen. Durch das Hintergreifen des Haltevorsprungs 18 mit dem jeweils insbesondere parallel oder nahezu parallel zur Klammerplatte 14 beziehungsweise 8 verlaufenden Rückhalteabschnitt 17 ist eine sichere Arretierung an der Basisplatte 2 gewährleistet. Optional weist der jeweilige Rückhalteabschnitt 18 an seinem freien Ende einen in Richtung der Klammerplatte 14 beziehungsweise 8 weisenden Vorsprung 19 auf, der in eine Vertiefung der Basisplatte 2 eingreift, um so das Lösen des Hakenelements 16 von der Basisplatte 2 weiter zu erschweren.

## Patentansprüche

1. Anordnung (1) zur Befestigung eines Innenrückspiegels (3) an einem Fahrzeug, insbesondere Kraftfahrzeug, wobei der Innenrückspiegel (3) einen Spiegelkopf (4) und einen Spiegelfuß (6) aufweist, die miteinander verbunden sind, wobei der Spiegelfuß (6) an einer fahrzeugfesten Basisplatte (2) lösbar befestigt ist, wobei zur lösbaren Befestigung wenigstens ein elastisch verformbares erstes Klammerelement (7) an dem Spiegelfuß (6) einerseits und an der Basisplatte (2) andererseits gehalten ist, und wobei das erste Klammerelement (7) durch seine elastische Verformung von der Basisplatte (2) und/oder von dem Spiegelfuß (6) lösbar ist, wobei das erste Klammerelement (7) eine sich zwischen Spiegelfuß (6) und Basisplatte (2) erstreckende erste Klammerplatte (8) mit einem oder mehreren an der ersten Klammerplatte (8) angeordneten Federelementen (10) aufweist, wobei das jeweilige Federelement (10) jeweils einen Rastvorsprung (12) des Spiegelfußes (6) oder der Basisplatte (2) formschlüssig spielfrei hintergreift, wobei der Innenrückspiegel (3) ein zweites Klammerelement (13) aufweist, das derart ausgebildet ist, dass das erste Klammerelement (7) unter elastischer Verformung des ersten Klammerelements (7) vollständig von dem Spiegelfuß (6) oder von der Basisplatte (2) ohne Lösen des zweiten Klammerelements (13) lösbar ist, **dadurch gekennzeichnet, dass** das zweite Klammerelement (13) an dem Spiegelfuß (6) einerseits und an der Basisplatte (2) andererseits mit Spiel formschlüssig gehalten ist, wobei das zweite Klammerelement (13) ein oder mehrere Hakenelemente (16) aufweist, die einen Haltevorsprung (18) des Spiegelfuß (6) oder der Basisplatte (2) mit dem Spiel formschlüssig hintergreifen, wobei die Hakenelemente (16) im Vergleich zu den Federelementen (10) steif ausgebildet sind, sodass sie nicht durch eine elastische Verformung ihrerseits von dem Spiegelfuß (6) oder der Basisplatte (2) werkzeugfrei lösbar sind.

2. Anordnung nach Anspruch 1, **dadurch gekennzeichnet, dass** das das erste Klammerelement (7) an dem Spiegelfuß (6) oder an der Basisplatte (2) befestigt ist.

3. Anordnung nach einem der vorhergehenden Ansprüche, **dadurch gekennzeichnet, dass** das zweite Klammerelement (13) eine zweite Klammerplatte (14) aufweist, die sich zwischen Basisplatte (2) und Spiegelfuß (6) und insbesondere parallel zu der ersten Klammerplatte (8) erstreckt, und an ihrem Außenumfang das oder die Hakenelemente (16) aufweist.

4. Anordnung nach Anspruch 3, **dadurch gekennzeichnet, dass** das oder die Hakenelemente (16) einstückig mit der zweiten Klammerplatte (14) ausgebildet sind.

5. Anordnung nach einem der vorhergehenden Ansprüche, **dadurch gekennzeichnet, dass** das oder die Hakenelemente (16) an der ersten Klammerplatte (8) angeordnet und insbesondere einstückig mit dieser ausgebildet sind.

6. Anordnung nach einem der vorhergehenden Ansprüche, **dadurch gekennzeichnet, dass** das zweite Klammerelement (13) bereichsweise elastisch verformbar ausgebildet ist.

7. Anordnung nach einem der vorhergehenden Ansprüche, **dadurch gekennzeichnet, dass** die zweite Klammerplatte (14) eine im Vergleich zu den Hakenelementen (16) höhere Elastizität aufweist.

8. Fahrzeug, insbesondere Kraftfahrzeug, mit einer Anordnung (1) gemäß einem der Ansprüche 1 bis 7.

## Claims

1. Arrangement (1) for attaching an inner rearview mirror (3) to a vehicle, in particular a motor vehicle, the inner rearview mirror (3) having a mirror head (4) and a mirror base (6) which are connected to one another, the mirror base (6) being detachably attached to a vehicle-mounted base plate (2), at least one elastically deformable first clamping element (7) being held on the mirror base (6) and on the base plate (2) for detachable attachment, and the first clamping element (7) being detachable from the base plate (2) and/or from the mirror base (6) due to its elastic deformation, the first clamping element (7) having a first clamping plate (8) which extends between the mirror base (6) and the base plate (2) and has one or more spring elements (10) arranged on the first clamping plate (8), each spring element (10) form-fittingly engaging behind a latching projection (12) of the mirror base (6) or of the base plate (2) without play, the inner rearview mirror (3) having a second clamping element (13) which is designed such that the first clamping element (7) can be completely detached from the mirror base (6) or from the base plate (2) under elastic deformation of the first clamping element (7) without detaching the second clamping element (13), **characterized in that** the second clamping element (13) is form-fittingly held on the mirror base (6) and on the base plate (2) with play, the second clamping element (13) having one or more hook elements (16) which form-fittingly engage behind a retaining projection (18) of the mirror base (6) or of the base plate (2) with play, the hook elements (16) being designed to be rigid compared to the spring elements (10) so that they cannot be detached from the mirror base (6) or the base plate (2) without tools due to their elastic deformation.

2. Arrangement according to claim 1, **characterized in that** the first clamping element (7) is attached to the mirror base (6) or to the base plate (2).

3. Arrangement according to either of the preceding claims,
**characterized in that** the second clamping element (13) has a second clamping plate (14) which extends between the base plate (2) and the mirror base (6) and in particular in parallel with the first clamping plate (8), and has the hook element(s) (16) on its outer periphery.

4. Arrangement according to claim 3, **characterized in that** the hook element(s) (16) are formed integrally with the second clamping plate (14).

5. Arrangement according to any of the preceding claims,
**characterized in that** the hook element(s) (16) are arranged on the first clamping plate (8) and are in particular formed integrally with it.

6. Arrangement according to any of the preceding claims,
**characterized in that** the second clamping element (13) is designed to be elastically deformable in some regions.

7. Arrangement according to any of the preceding claims,
**characterized in that** the second clamping plate (14) has a higher elasticity compared to the hook elements (16).

8. Vehicle, in particular a motor vehicle, having an arrangement (1) according to any of claims 1 to 7.

## Revendications

1. Agencement (1) destiné à la fixation d'un rétroviseur intérieur (3) à un véhicule, en particulier un véhicule automobile, dans lequel le rétroviseur intérieur (3) présente une tête de rétroviseur (4) et un pied de rétroviseur (6) qui sont reliés l'un à l'autre, dans lequel le pied de rétroviseur (6) est fixé de manière amovible à une plaque de base (2) solidaire du véhicule, dans lequel, pour la fixation amovible, au moins un premier élément de serrage (7) élastiquement déformable est maintenu d'une part sur le pied de rétroviseur (6) et d'autre part sur la plaque de base (2), et dans lequel le premier élément de serrage (7) peut être détaché de la plaque de base (2) et/ou du pied de rétroviseur (6), dans lequel le premier élément de serrage (7) présente une première plaque de serrage (8) s'étendant entre le pied de rétroviseur (6) et la plaque de base (2) et comportant un ou plusieurs éléments élastiques (10) disposés sur la première plaque de serrage (8), dans lequel l'élément élastique (10) respectif vient en prise par complémentarité de forme et sans jeu par l'arrière avec respectivement une saillie d'encliquetage (12) du pied de rétroviseur (6) ou de la plaque de base (2), dans lequel le rétroviseur intérieur (3) présente un second élément de serrage (13) conçu de telle sorte que le premier élément de serrage (7) peut être entièrement détaché du pied de rétroviseur (6) ou de la plaque de base (2) par déformation élastique du premier élément de serrage (7) sans détachement du second élément de serrage (13), **caractérisé en ce que** le second élément de serrage (13) est maintenu par complémentarité de forme et avec jeu d'une part sur le pied de rétroviseur (6) et d'autre part sur la plaque de base (2), dans lequel le second élément de serrage (13) présente un ou plusieurs éléments formant crochets (16) qui viennent en prise par complémentarité de forme et avec jeu par l'arrière avec une saillie de maintien (18) du pied de rétroviseur (6) ou de la plaque de base (2), dans lequel les éléments formant crochets (16) sont conçus de manière à être plus rigides que les éléments élastiques (10), de sorte qu'ils ne peuvent pas se détacher sans outil du pied de rétroviseur (6) ou de la plaque de base (2) par déformation élastique.

2. Agencement selon la revendication 1, **caractérisé en ce que** le premier élément de serrage (7) est fixé au pied de rétroviseur (6) ou à la plaque de base (2).

3. Agencement selon l'une des revendications précédentes,
**caractérisé en ce que** le second élément de serrage (13) présente une seconde plaque de serrage (14) qui s'étend entre la plaque de base (2) et le pied de rétroviseur (6), et en particulier parallèlement à la première plaque de serrage (8), et présente, sur son pourtour extérieur, le ou les éléments formant crochets (16).

4. Agencement selon la revendication 3, **caractérisé en ce que** le ou les éléments formant crochets (16) sont conçus d'un seul tenant avec la seconde plaque de serrage (14).

5. Agencement selon l'une des revendications précédentes,
**caractérisé en ce que** le ou les éléments formant crochets (16) sont disposés sur la première plaque de serrage (8) et sont en particulier conçus d'un seul tenant avec celle-ci.

6. Agencement selon l'une des revendications précédentes,
**caractérisé en ce que** le second élément de serrage (13) est conçu de manière à être déformable élastiquement dans certaines zones.

7. Agencement selon l'une des revendications précédentes,
**caractérisé en ce que** la seconde plaque de serrage (14) présente une élasticité supérieure à celle des éléments formant crochets (16).

8. Véhicule, en particulier véhicule automobile, comportant un agencement (1) conformément à l'une des revendications 1 à 7.
